# EUROPEAN PATENT SPECIFICATION

(11) **EP 4 641 769 B1**
(45) Date of publication and mention of the grant of the patent: **05.08.2026**
(21) Application number: 23918492.2
(22) Date of filing: 15.09.2023
(51) Int. Cl.: H01M 10/6556, F28F 3/12, F28F 9/02, B60K 11/04, F28F 9/013, H01M 10/613, H01M 10/615, H01M 10/625, H01M 10/6568

(54) **VEHICLE HEAT EXCHANGER**
WÄRMETAUSCHER FÜR EIN KRAFTFAHRZEUG
ÉCHANGEUR DE CHALEUR POUR VÉHICULE

(30) Priority: 23.01.2023 JP 2023008124
(43) Date of publication of application: 29.10.2025
(73) Proprietor: Japan Climate Systems Corporation, Higashihiroshima-shi, Hiroshima 739-0153 (JP)
(72) Inventor: HYAKUDA, Kazutoshi, Higashihiroshima-shi, Hiroshima 739-0153 (JP); KURIHARA, Masayoshi, Higashihiroshima-shi, Hiroshima 739-0153 (JP)
(74) Representative: Germain Maureau
(86) International application number: PCT/JP2023/033735
(87) International publication number: WO 2024/157535

(56) References cited:
- WO-A1-2020/213673
- JP-A- 2016 161 158
- JP-A- 2020 085 288
- JP-A- 2021 169 112
- JP-A- 2022 036 413
- US-A1- 2019 277 578
- US-B2- 10 099 320

## Description

### TECHNICAL FIELD

The present disclosure relates to a vehicle heat exchanger for adjusting the temperature of a battery mounted on a vehicle.

### BACKGROUND ART

An electric vehicle, for example, is equipped with a high-voltage battery for supplying electric power to a traction motor, separately from an auxiliary battery. The high-voltage battery is difficult to supply electric power, or its life is shortened, if it is in a high-temperature state due to heat generated during charging and discharging; therefore, the high-voltage battery is cooled by a heat exchanger. In addition, the charge-discharge performance of the high-voltage battery is extremely lowered if it is in an extremely low-temperature state; therefore, the high-voltage battery is heated by the heat exchanger. JP 2021 169112 A discloses, according to the preamble of claim 1, a vehicle heat exchanger for temperature adjustment of a battery comprising plate elements defining a flow path for a heat exchange medium. JP 2020 085288 A relates to a heat exchanger in which a pipe is inserted into an insertion hole of a plate and joined by brazing material supplied from an inner surface of the plate, thereby addressing the problem of reliable pipe to plate joining.

For example, Patent Document 1 discloses a cooling mechanism that cools a battery module using a liquid medium. The cooling mechanism has a refrigerant flow path formed by a partition wall portion and a cover plate, and the liquid medium and the battery module exchange heat while the liquid medium is flowing through the refrigerant flow path, thereby cooling the battery module.

### CITATION LIST

### PATENT DOCUMENT

Patent Document 1: Japanese Unexamined Patent Publication No. 2021-125346

### SUMMARY OF THE INVENTION

### TECHNICAL PROBLEM

A heat exchanger that exchanges heat between a battery and a heat exchange medium is needed to cool or heat the battery. Since the heat exchanger needs to have a flow path through which the heat exchange medium can flow, the heat exchanger needs to be configured by combining multiple members, as in Patent Document 1, and further needs to include a pipe member for supplying and discharging the heat exchange medium into and from the heat exchanger.

Here, it is conceivable to braze two metal plates, e.g., a first plate and a second plate, to each other to form a heat exchanger having a flow path therein. A brazing surface needs a sacrificial layer; therefore, it is necessary to provide a sacrificial layer on each of a surface of the first plate toward the second plate (inner surface of the first plate) and a surface of the second plate toward the first plate (inner surface of the second plate).

In providing a pipe member in this configuration, if the pipe member is inserted in a through hole formed in the first plate and brazed to an outer surface of the first plate, it becomes possible to braze the pipe member to the first plate simultaneously with the brazing of the first and second plates, thus improving the manufacturing efficiency of the heat exchanger.

However, in order to braze the pipe member to the outer surface of the first plate, a sacrificial layer is necessary on the outer surface of the first plate as well. In other words, since the first plate requires sacrificial layers on both of its surfaces, there is a problem of increased material cost.

It is therefore an object of the present disclosure to reduce a material cost for a heat exchanger formed by brazing a plurality of plates and further brazing a pipe member to the plates.

### SOLUTION TO THE PROBLEM

In order to achieve the above object, an aspect of the present disclosure can be premised on a vehicle heat exchanger for a temperature adjustment of a battery that supplies electric power to a traction motor mounted on a vehicle. A first flow-path-forming plate made of a metal and a second flow-path-forming plate made of a metal are brazed to each other, the first flow-path-forming plate being in contact with an outer surface of the battery, the second flow-path-forming plate being arranged on an opposite side of the first flow-path-forming plate to the battery. A flow path that allows a liquid heat exchange medium to flow is provided between the first flow-path-forming plate and the second flow-path-forming plate. The first flow-path-forming plate has a through hole for insertion of a base end portion of a pipe member for supplying and discharging the heat exchange medium. A brazing portion is provided at a portion of the base end portion of the pipe member located inside the flow path, the brazing portion being brazed to an inner surface of the first flow-path-forming plate.

According to this configuration, to braze the first flow-path-forming plate and the second flow-path-forming plate, a sacrificial layer is provided on each of a surface of the first flow-path-forming plate (inner surface of the first flow-path-forming plate) facing the second flow-path-forming plate and a surface of the second flow-path-forming plate (inner surface of the second flow-path-forming plate) facing the first flow-path-forming plate, which enables brazing between the first flow-path-forming plate and the second flow-path-forming plate. The plate having the sacrificial layer can be made of a clad material, for example.

In brazing the pipe member to the first flow-path-forming plate, the brazing portion of the pipe member is located inside the flow path and is brazed to the inner surface of the first flow-path-forming plate; therefore, it is not necessary to provide a sacrificial layer on the outer surface of the first flow-path-forming plate. Thus, it is only necessary to prepare the first flow-path-forming plate and the second flow-path-forming plate each having a sacrificial layer on one surface, and a material cost is lower than that of a plate having sacrificial layers on both surfaces.

The first flow-path-forming plate may have a flat portion at a portion corresponding to the flow path. In this case, the through hole is formed so as to penetrate the flat portion, and the brazing portion can be brazed to the inner surface of the flat portion. The flat portion has a simpler shape than a curved portion, which enables improved forming accuracy. Brazing the brazing portion to this flat portion results in favorable brazing characteristics.

The first flow-path-forming plate and the second flow-path-forming plate may be formed of plates each having a sacrificial layer only on a surface to be brazed. Accordingly, the material cost for the first flow-path-forming plate and the second flow-path-forming plate can be reliably reduced.

The first flow-path-forming plate may be arranged so as to be in contact with a bottom surface of the battery, and may have a long shape in a predetermined direction along the bottom surface. **In** this case, the second flow-path-forming plate may be arranged under the first flow-path-forming plate, and extend in the predetermined direction. It is thus possible to adjust the temperature in a wide area of the bottom surface of the battery.

The pipe member may include a first pipe member to supply the heat exchange medium to the flow path and a second pipe member to discharge the heat exchange medium from the flow path, the first pipe member being provided on one side in a longitudinal direction of the first flow-path-forming plate, the second pipe member being provided on the other side in the longitudinal direction of the first flow-path-forming plate. In this case, a first through hole for insertion of a base end portion of the first pipe member can be formed on the one side in the longitudinal direction of the first flow-path-forming plate, and a second through hole for insertion of a base end portion of the second pipe member can be formed on the other side in the longitudinal direction of the first flow-path-forming plate. Further, a first brazing portion can be provided at a portion of the base end portion of the first pipe member located inside the flow path, the first brazing portion being brazed to the inner surface of the first flow-path-forming plate, and a second brazing portion can be provided at a portion of the base end portion of the second pipe member located inside the flow path, the second brazing portion being brazed to the inner surface of the first flow-path-forming plate. Accordingly, multiple pipe members for supplying and discharging the heat exchange medium can be brazed simultaneously, making it possible to reduce the number of manufacturing steps.

The brazing portion may be formed of a projection projecting radially outward from an outer surface of the pipe member and extending in a circumferential direction. The projection closes a portion between the outer surface of the pipe member and the inner surface of the through hole, thereby ensuring high sealability.

The first flow-path-forming plate may have a temporary fixing portion to fix temporarily the pipe member to the first flow-path-forming plate. According to this configuration, it is possible to prevent the pipe member from dropping or becoming misaligned during brazing of the pipe member to the first flow-path-forming plate; therefore, the pipe member can be brazed to a predetermined position of the first flow-path-forming plate with accuracy.

The temporary fixing portion may be formed of a swaging portion to be swaged and fixed to the pipe member. Accordingly, the pipe member can be fixed temporarily to the first flow-path-forming plate firmly. In this case, an insertion hole for insertion of a swaging tool may be formed in a portion of the first flow-path-forming plate on an outside of the swaging portion in a radial direction of the through hole. Thus, fixing by swaging can be made easier.

The brazing portion of the pipe member may be arranged so as to close the insertion hole from the inside of the flow path. It is thus possible to reduce leakage of the heat exchange medium in the flow path from the insertion hole while making the fixing by swaging easier.

### ADVANTAGES OF THE INVENTION

As can be seen from the foregoing description, the first flow-path-forming plate and the second flow-path-forming plate are brazed to each other to form the flow path, and the pipe member for supplying and discharging is brazed to the inner surface of the first flow-path-forming plate, with the pipe member inserted in the through hole of the first flow-path-forming plate; therefore, it is possible to form the heat exchanger using the flow-path-forming plates each having a sacrificial layer on one surface and reduce the material cost.

### BRIEF DESCRIPTION OF THE DRAWINGS

[FIG. 1] is a diagram illustrating a perspective view of a vehicle heat exchanger according to a first embodiment of the present invention as viewed from above.
[FIG. 2] is a diagram illustrating a schematic structure of a battery temperature adjustment device.
[FIG. 3] is a sectional diagram taken along line III-III in FIG. 1.
[FIG. 4] is a diagram illustrating a perspective view of the vicinity of an inlet-side pipe member of the vehicle heat exchanger as viewed from above.
[FIG. 5] is a diagram illustrating a plan view of the vicinity of the inlet-side pipe member of the vehicle heat exchanger.
[FIG. 6] is a diagram illustrating a sectional view taken along line VI-VI in FIG. 5.
[FIG. 7] is a diagram of an exploded view corresponding to line VI-VI in FIG. 5.
[FIG. 8] is a diagram corresponding to FIG. 6 before insertion of a swaging tool into an insertion hole.
[FIG. 9] is a diagram corresponding to FIG. 6 after insertion of the swaging tool into the insertion hole.
[FIG. 10] is a diagram corresponding to FIG. 5 according to a second embodiment of the present invention.
[FIG. 11] is a diagram illustrating a sectional view taken along line XI-XI according to the second embodiment, before swaging.
[FIG. 12] is a diagram illustrating a sectional view taken along line XI-XI according to the second embodiment, after swaging.

### DETAILED DESCRIPTION

Embodiments of the present invention will be described in detail below with reference to the drawings. The following description of the preferred embodiments is merely illustrative in nature, and is not intended to limit the present invention, its application, or its use.

### (First Embodiment)

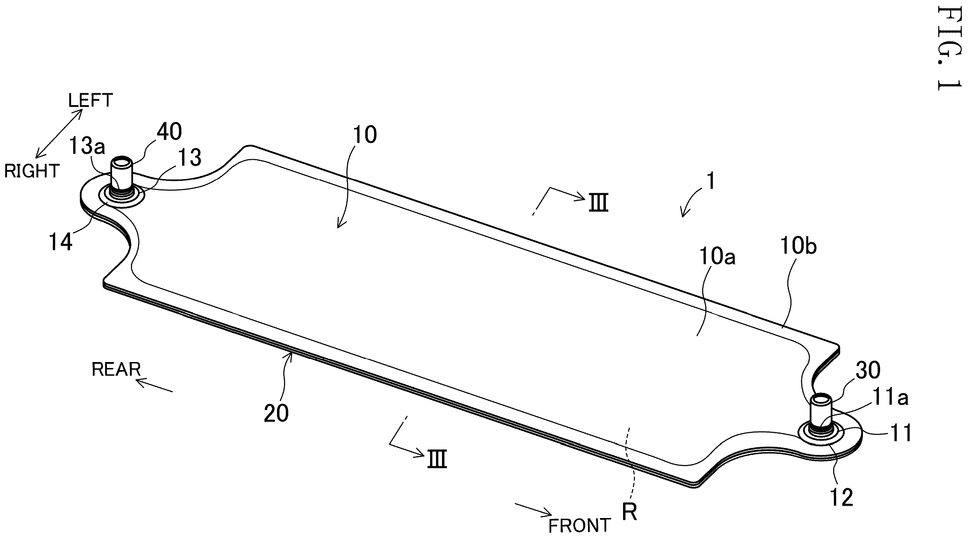

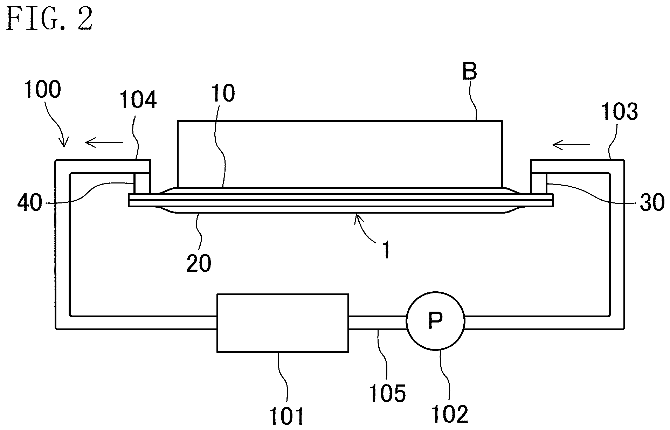

FIG. 1 is a diagram illustrating a perspective view of a vehicle heat exchanger 1 according to a first embodiment of the present invention as viewed from above. FIG. 2 is a diagram illustrating a schematic structure of a battery temperature adjustment device 100 having the vehicle heat exchanger 1. The battery temperature adjustment device 100 is used, for example, for adjusting the temperature of a battery B mounted on a vehicle such as an automobile. The battery B is a battery for supplying electric power to a traction motor (not illustrated) mounted on the automobile, and is configured to have a higher voltage and a larger capacity than general auxiliary batteries. The battery B is disposed, for example, outside the automobile under the floor panel. The bottom surface of the battery B is formed so as to extend in the horizontal direction. The battery B may be configured as a battery unit having a plurality of cells. The type of battery B is not particularly limited, and examples thereof include a lithium-ion battery. The battery B may be disposed in, for example, a vehicle compartment or a luggage compartment.

The automobile may be an electric vehicle which does not include an internal combustion engine, or may be a hybrid vehicle including both an internal combustion engine and a traction motor. The hybrid vehicle may be a plug-in hybrid vehicle. In the case of the electric vehicle and the plug-in hybrid vehicle, the vehicle can be charged from an external charging facility or by regeneration from the traction motor.

The battery temperature adjustment device 100 is configured to adjust the temperature of the battery B using a liquid heat exchange medium. The heat exchange medium may include, for example, coolant liquid, but is not limited thereto, and may be any heat exchange medium having fluidity. The battery temperature adjustment device 100 has, in addition to the vehicle heat exchanger 1, a temperature adjuster 101 that adjusts the temperature of the heat exchange medium, a pump 102 that sends the heat exchange medium, an inlet-side pipe 103, an outlet-side pipe 104, and an intermediate pipe 105. The discharge side of the pump 102 is connected to the inlet side of the vehicle heat exchanger 1 through the inlet-side pipe 103. The outlet side of the vehicle heat exchanger 1 is connected to the temperature adjuster 101 through the outlet-side pipe 104. The temperature adjuster 101 and the suction side of the pump 102 are connected to each other through the intermediate pipe 105. Thus, the vehicle heat exchanger 1, the temperature adjuster 101, and the pump 102 are connected to each other, and a circulation path through which the heat exchange medium can circulate is formed.

The temperature adjuster 101 may be configured as, for example, a heat exchanger that cools the heat exchange medium by exchanging heat between outside air and the heat exchange medium, may be configured as a heater or the like that heats the heat exchange medium, or may be configured as a device or the like that can both cool and heat the heat exchange medium. Although not illustrated, a temperature adjuster for cooling the heat exchange medium and a temperature adjuster for heating the heat exchange medium may be separately provided. To cool the battery B, the heat exchange medium is cooled by the temperature adjuster 101. To heat the battery B, the heat exchange medium is heated by the temperature adjuster 101. The temperature adjuster 101 is controlled by a controller (not illustrated). The controller detects the temperature state of the battery B and the charge-discharge state of the battery B, and controls the temperature adjuster 101 such that the temperature range of the battery B falls within an appropriate range.

The pump 102 is also controlled by the controller. The controller detects the temperature state of the battery B and the charge-discharge state of the battery B, and controls the pump 102 such that the temperature range of the battery B falls within the appropriate range.

The vehicle heat exchanger 1 is used for adjusting the temperature of the battery B by exchanging heat between the battery B and the heat exchange medium such that the temperature range of the battery B falls within the appropriate range. The temperature of the battery B can be adjusted from below if the vehicle heat exchanger 1 is disposed under the battery B, but is not limited thereto. The vehicle heat exchanger 1 may be disposed above the battery B, or may be disposed on a lateral side of the battery B. Multiple vehicle heat exchangers 1 may be disposed so as to vertically sandwich the battery B. The multiple vehicle heat exchangers 1 may be connected in series or in parallel. The term "series" indicates that the multiple vehicle heat exchangers 1 are arranged and connected in the flow direction of the heat exchange medium, and the term "parallel" indicates that the multiple vehicle heat exchangers 1 are arranged and connected such that the heat exchange medium flows into the multiple vehicle heat exchangers 1 at the same time.

In the present embodiment, a case where the vehicle heat exchanger 1 is disposed under the battery B will be described. The vehicle heat exchanger 1 includes an upper flow-path-forming plate (first flow-path-forming plate) 10 disposed on the upper side of the vehicle heat exchanger 1, and a lower flow-path-forming plate (second flow-path-forming plate) 20 disposed on the lower side of the vehicle heat exchanger 1. Since the vehicle heat exchanger 1 is disposed under the battery B, the upper flow-path-forming plate 10 is a contact member in contact with the bottom surface (outer surface) of the battery B, and the lower flow-path-forming plate 20 is a member below the upper flow-path-forming plate 10 and joined to the lower side (opposite side to the battery B) of the upper flow-path-forming plate 10.

The vehicle heat exchanger 1 further includes an inlet-side pipe member (first pipe member) 30 for supplying the heat exchange medium sent from the pump 102 to a flow path R of the vehicle heat exchanger 1, and an outlet-side pipe member (second pipe member) 40 for discharging the heat exchange medium in the flow path R to the outside of the vehicle heat exchanger 1. In this embodiment, the side where the inlet-side pipe member 30 is provided is the front side, and the side where the outlet-side pipe member 40 is provided is the back side. For the sake of convenience of description, the front side is a vehicle front side, and the back side is a vehicle rear side. Further, when viewed while facing toward the vehicle front side, the side on the right is the right side, and the side on the left is the left side. The left-right direction of the vehicle coincides with a width direction. These direction definitions do not limit the direction of the vehicle heat exchanger 1 mounted on the automobile, and the vehicle heat exchanger 1 may be mounted on the vehicle such that the front-rear direction is reversed, or may be mounted such that the left-right direction is oriented in the vehicle front-rear direction.

As illustrated in FIG. 2, the vehicle heat exchanger 1 has a rectangular shape as a whole, which is elongated in the front-rear direction (predetermined direction) along the bottom surface of the battery B, and therefore, both the upper flow-path-forming plate 10 and the lower flow-path-forming plate 20 extend in the front-rear direction. Since the vehicle heat exchanger 1 has the shape elongated in the front-rear direction, the dimension of the vehicle heat exchanger 1 in the front-rear direction is longer than the dimension in the left-right direction. The vehicle heat exchanger 1 may have a shape elongated in the left-right direction, or may have a shape whose dimensions in the front-rear direction and left-right direction are the same. The front side of the vehicle heat exchanger 1 will be referred to as one side in a longitudinal direction, and the rear side of the vehicle heat exchanger 1 will be referred to as the other side in the longitudinal direction.

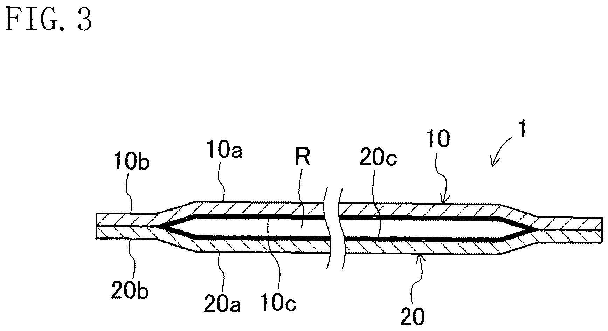

As illustrated in FIG. 3, the flow path R allowing the heat exchange medium to flow is formed between the upper flow-path-forming plate 10 and the lower flow-path-forming plate 20. The flow path R extends in the front-rear direction of the vehicle heat exchanger 1. That is, the upper flow-path-forming plate 10 has an upper bulging portion 10a bulging upward and an upper extending plate portion 10b extending horizontally from a peripheral edge portion of the upper bulging portion 10a toward the outside of the flow path R. The upper bulging portion 10a and the upper extending plate portion 10b are formed of a single aluminum alloy plate. The upper bulging portion 10a and the upper extending plate portion 10b may be molded by a press molding method, for example. The upper flow-path-forming plate 10 is formed from a plate having a sacrificial layer 10c only on a surface (lower surface) to face the lower flow-path-forming plate 20, that is, a plate which is clad with a brazing material (also referred to as a clad material).

The lower flow-path-forming plate 20 has a lower bulging portion 20a bulging downward and a lower extending plate portion 20b extending horizontally from a peripheral edge portion of the lower bulging portion 20a toward the outside of the flow path R. The lower bulging portion 20a and the lower extending plate portion 20b are formed of a single aluminum alloy plate, similarly to the upper flow-path-forming plate 10. The lower flow-path-forming plate 20 is formed of a plate having a sacrificial layer 20c only on a surface (upper surface) to face the upper flow-path-forming plate 10, that is, a plate which is clad with a brazing material. The thicknesses of the upper flow-path-forming plate 10 and the lower flow-path-forming plate 20 may be the same, or may differ from each other.

The upper bulging portion 10a forms an upper wall portion of the flow path R, and is a portion corresponding to the flow path R. The portion corresponding to the flow path R is a portion defining and forming the flow path R. The bottom surface of the battery B contacts the upper surface of the upper bulging portion 10a. On the other hand, the lower bulging portion 20a is located right under the upper bulging portion 10a, and is a portion forming a lower wall portion of the flow path R. The dimension of the flow path R in the up-down direction is set by the bulging amounts of the upper bulging portion 10a and the lower bulging portion 20a, and the dimension of the flow path R in the left-right direction (width direction) is set by the dimensions of the upper bulging portion 10a and the lower bulging portion 20a in the left-right direction. Further, the dimension of the flow path R in the front-rear direction (length direction) is set by the dimensions of the upper bulging portion 10a and the lower bulging portion 20a in the front-rear direction. In this embodiment, the dimension of the flow path R in the up-down direction is set to be shorter than the dimension in the width direction. Thus, the flow path R has a horizontally flat cross section.

The heat exchange medium flowing through the flow path R exchanges heat with the battery B through the upper bulging portion 10a. The upper bulging portion 10a is made of aluminum alloy, which is a material having a high thermal conductivity; therefore, a heat transfer efficiency can be improved.

Each of the upper bulging portion 10a and the lower bulging portion 20a has a front portion, where an intermediate portion in the left-right direction protrudes forward as compared to both the left and right sides. Moreover, each of the upper bulging portion 10a and the lower bulging portion 20a has a rear portion, where an intermediate portion in the left-right direction protrudes rearward as compared to both the left and right sides. Accordingly, the flow path R has a front portion whose intermediate portion in the left-right direction protrudes forward, and a rear portion whose intermediate portion in the left-right direction protrudes rearward.

The upper extending plate portion 10b has an annular shape around the entire circumference of the peripheral edge portion of the upper bulging portion 10a, and is substantially flat. The lower extending plate portion 20b has an annular shape around the entire circumference of the peripheral edge portion of the lower bulging portion 20a, and is substantially flat, similarly to the upper extending plate portion 10b. The lower extending plate portion 20b is disposed right under the upper extending plate portion 10b, and the upper extending plate portion 10b and the lower extending plate portion 20b overlap each other in plan view.

The upper extending plate portion 10b and the lower extending plate portion 20b are portions forming a brazing margin, and the lower surface of the upper extending plate portion 10b and the upper surface of the lower extending plate portion 20b are brazed over the entire circumference. The upper extending plate portion 10b and the lower extending plate portion 20b are brazed to each other, thereby ensuring the sealability between the upper extending plate portion 10b and the lower extending plate portion 20b.

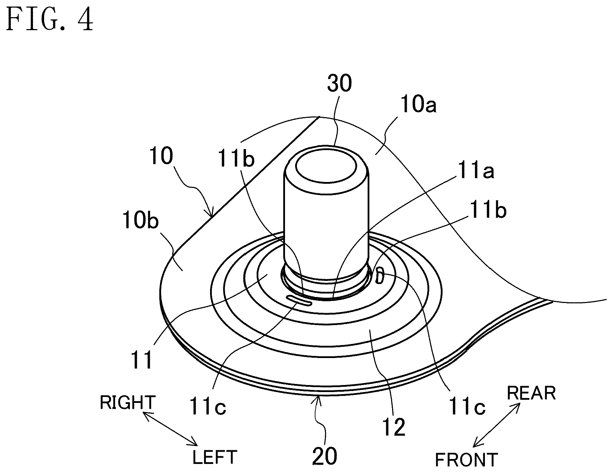

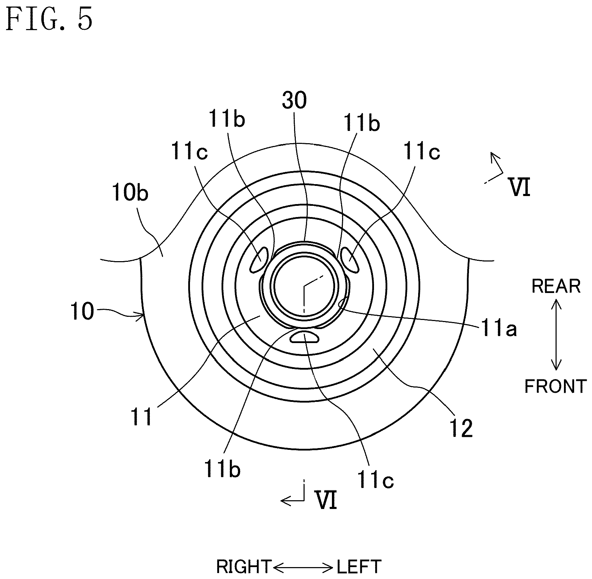

As illustrated in FIGS. 4 to 7, the front portion of the upper bulging portion 10a of the upper flow-path-forming plate 10 has a circular front flat portion 11 extending horizontally. The front flat portion 11 is one step higher than the front portion of the upper bulging portion 10a. Accordingly, a front inclined portion 12 is formed at a peripheral edge portion of the front flat portion 11, inclined downward in the radially outward direction.

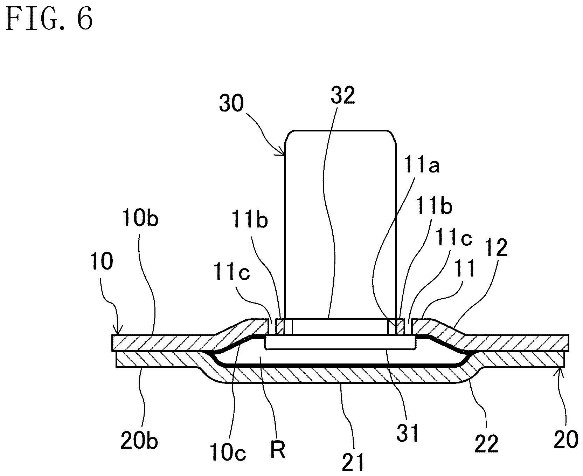

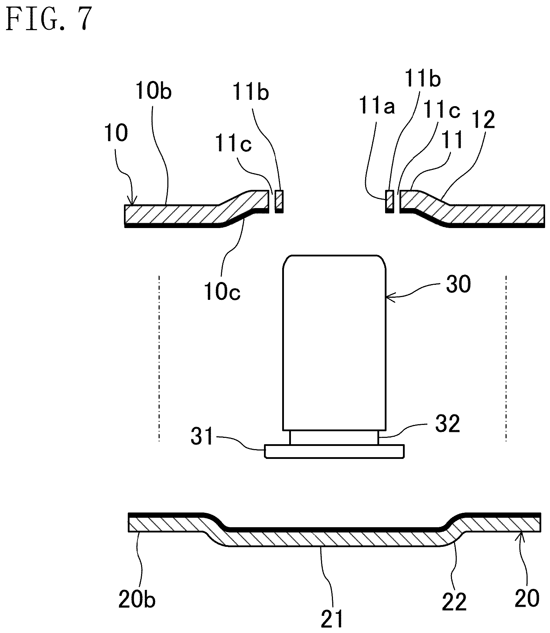

As illustrated in FIGS. 6 and 7, the front portion of the lower bulging portion 20a of the lower flow-path-forming plate 20 has a circular front flat portion 21 extending horizontally. The front flat portion 21 is one step lower than the front portion of the lower bulging portion 20a. Accordingly, a front inclined portion 22 is formed at a peripheral edge portion of the front flat portion 21, inclined upward in the radially outward direction. The front flat portion 21 of the lower flow-path-forming plate 20 and the front flat portion 11 of the upper flow-path-forming plate 10 are disposed so as to overlap each other in plan view.

The front flat portion 11 has a front through hole (first through hole) 11a into which a base end portion of the inlet-side pipe member 30 is inserted. The front through hole 11a has a circular shape, and penetrates the front flat portion 11 in the thickness direction (up-down direction). Since the front flat portion 11 has a planar shape, the lower surface (inner surface) of the front flat portion 11 also has a planar shape, and the surface around the front through hole 11a also has a planar shape.

The inlet-side pipe member 30 is formed of a cylindrical member made of aluminum alloy, and is attached to the upper flow-path-forming plate 10 with its axis extending in the up-down direction. A brazing portion 31 (first brazing portion) is provided at a portion of the base end portion of the inlet-side pipe member 30 located inside the flow path R, and is brazed to the inner surface of the upper flow-path-forming plate 10, specifically the inner surface of the front flat portion 11. The brazing portion 31 is an annular projection projecting radially outward from the outer surface of the inlet-side pipe member 30 and extending continuously in the circumferential direction. In this embodiment, the brazing portion 31 is provided at the base end of the inlet-side pipe member 30, but is not limited thereto: the brazing portion 31 may be provided at a location away from the base end of the inlet-side pipe member 30 toward the tip end side.

An annular groove 32 extending continuously in the circumferential direction is also formed in the outer surface of the inlet-side pipe member 30. The groove 32 is located closer to the tip end side of the inlet-side pipe member 30 than the brazing portion 31, and is adjacent to the brazing portion 31. In a state in which the brazing portion 31 is brought into contact with the inner surface of the front flat portion 11, the groove 32 and the inner surface of the front through hole 11a are positioned at the same height.

Multiple swaging portions 11b for temporarily fixing the inlet-side pipe member 30 to the upper flow-path-forming plate 10 are provided at the front flat portion 11 of the upper flow-path-forming plate 10. In this embodiment, three swaging portions 11b are disposed at intervals in the circumferential direction of the front through hole 11a. The swaging portions 11b are formed of part of a peripheral edge portion of the front through hole 11a; therefore, when the brazing portion 31 is brought into contact with the inner surface of the front flat portion 11, the swaging portion 11b is brought to the same height as the groove 32 of the inlet-side pipe member 30.

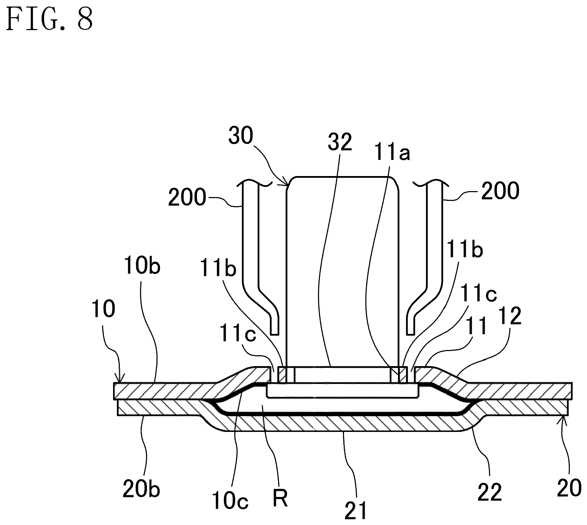

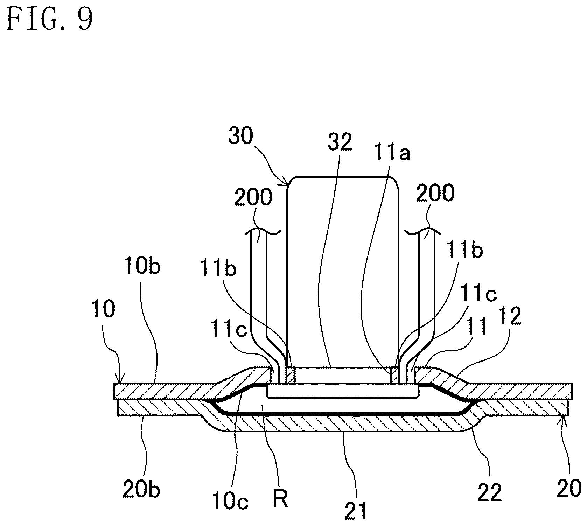

An insertion hole 11c for insertion of a swaging tool 200 (illustrated in FIGS. 8 and 9) is formed in a portion of the upper flow-path-forming plate 10 on an outside of the swaging portions 11b in the radial direction of the front through hole 11a. The number of insertion holes 11c is the same as the number of swaging portions 11b, and the insertion holes 11c and the swaging portions 11b are arranged at the same positions in the circumferential direction of the front through hole 11a.

As illustrated in FIG. 9, the swaging tool 200 is inserted into each insertion hole 11c, and a force is applied inward in the radial direction of the front through hole 11a, which causes elastic deformation of the swaging portion 11b inward in the radial direction of the front through hole 11a. At this moment, since each of the swaging portions 11b and the groove 32 of the inlet-side pipe member 30 are positioned at the same height, the swaging portions 11b enter the groove 32 and are swaged and fixed to the inlet-side pipe member 30. The inlet-side pipe member 30 is temporarily fixed to the upper flow-path-forming plate 10 before brazing. That is, each swaging portion 11b is a temporary fixing portion for temporarily fixing the inlet-side pipe member 30 to the upper flow-path-forming plate 10.

The projection amount of the brazing portion 31 of the inlet-side pipe member 30 in the radial direction is set such that the brazing portion 31 is located right under the insertion holes 11c and can close the insertion holes 11c. That is, in the state in which the inlet-side pipe member 30 is temporarily fixed to the upper flow-path-forming plate 10, the brazing portion 31 closes the insertion holes 11c from the inside of the flow path R.

The number of insertion holes 11c and the number of swaging portions 11b are not limited to three, and may be set to any number including two or less or four or more. One insertion hole 11c and one swaging portion 11b may be provided. The swaging portions 11b may be brought into contact with the outer surface of the inlet-side pipe member 30, without forming the groove 32 in the inlet-side pipe member 30.

As illustrated in FIG. 1, the rear portion of the upper bulging portion 10a of the upper flow-path-forming plate 10 has a rear flat portion 13 and a rear inclined portion 14, similar to the front flat portion 11. Although not illustrated, a rear portion of the lower bulging portion 20a of the lower flow-path-forming plate 20 has a rear flat portion similar to the front flat portion 21 and a rear inclined portion.

The rear flat portion 13 has a rear through hole (second through hole) 13a into which a base end portion of the outlet-side pipe member 40 is inserted. The rear through hole 13a is similar to the front through hole 11a.

The outlet-side pipe member 40 is configured similarly to the inlet-side pipe member 30, and has a brazing portion (second brazing portion) and a groove, although not illustrated. Although not illustrated, multiple swaging portions for temporarily fixing the outlet-side pipe member 40 to the upper flow-path-forming plate 10, and insertion holes for insertion of a swaging tool, are provided at the rear flat portion 13 of the upper flow-path-forming plate 10, similarly to the front side.

The inlet-side pipe member 30 and the outlet-side pipe member 40 can be brazed simultaneously with the brazing between the upper flow-path-forming plate 10 and the lower flow-path-forming plate 20. Specifically, the inlet-side pipe member 30 and the outlet-side pipe member 40 are temporarily fixed to the upper flow-path-forming plate 10; thereafter, the upper flow-path-forming plate 10 is held in an overlapped state with the lower flow-path-forming plate 20. In this state, the upper extending plate portion 10b and the lower extending plate portion 20b overlap each other in the up-down direction.

Thereafter, the upper flow-path-forming plate 10, to which the inlet-side pipe member 30 and the outlet-side pipe member 40 are temporarily fixed, and the lower flow-path-forming plate 20 are carried into a brazing furnace, heated to the melting temperature of a brazing material, and carried out of the furnace. The vehicle heat exchanger 1 is obtained when the brazing material is solidified, which causes the brazing of the inlet-side pipe member 30 and the outlet-side pipe member 40 to the upper flow-path-forming plate 10, and the brazing between the upper extending plate portion 10b and the lower extending plate portion 20b. The upper flow-path-forming plate 10 and the lower flow-path-forming plate 20 may be brazed to each other after brazing the inlet-side pipe member 30 and the outlet-side pipe member 40 to the upper flow-path-forming plate 10.

### (Effects and Advantages of Embodiment)

As can be seen from the foregoing description, according to the present embodiment, to braze the upper flow-path-forming plate 10 and the lower flow-path-forming plate 20 to each other, the sacrificial layers 10c, 20c are provided on the inner surface of the upper flow-path-forming plate 10 and the inner surface of the lower flow-path-forming plate 20, respectively, which enables the brazing between the upper flow-path-forming plate 10 and the lower flow-path-forming plate 20.

In brazing the inlet-side pipe member 30 to the upper flow-path-forming plate 10, the brazing portion 31 of the inlet-side pipe member 30 is located inside the flow path R and is brazed to the inner surface of the upper flow-path-forming plate 10; therefore, it is not necessary to provide a sacrificial layer on the outer surface of the upper flow-path-forming plate 10. Thus, it is only necessary to prepare the upper flow-path-forming plate 10 and the lower flow-path-forming plate 20 each having a sacrificial layer on one surface, and a material cost is lower than that of a plate having sacrificial layers on both surfaces. The same applies to brazing of the outlet-side pipe member 40.

Since the inlet-side pipe member 30 and the outlet-side pipe member 40 can be temporarily fixed to the upper flow-path-forming plate 10 before brazing the inlet-side pipe member 30 and the outlet-side pipe member 40, it is possible to prevent the inlet-side pipe member 30 and the outlet-side pipe member 40 from dropping or becoming misaligned before brazing. Thus, the inlet-side pipe member 30 and the outlet-side pipe member 40 can be brazed to predetermined positions of the upper flow-path-forming plate 10 with accuracy.

### (Second Embodiment)

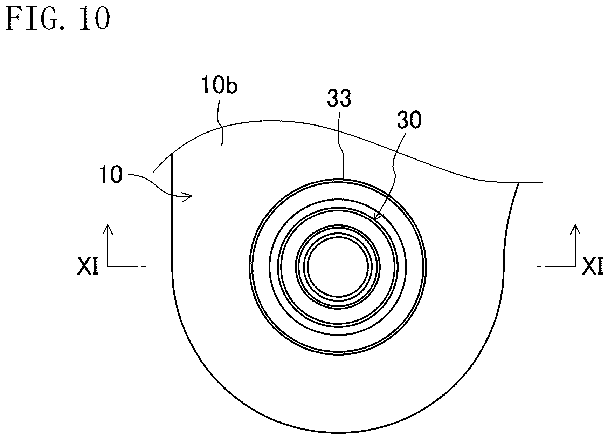

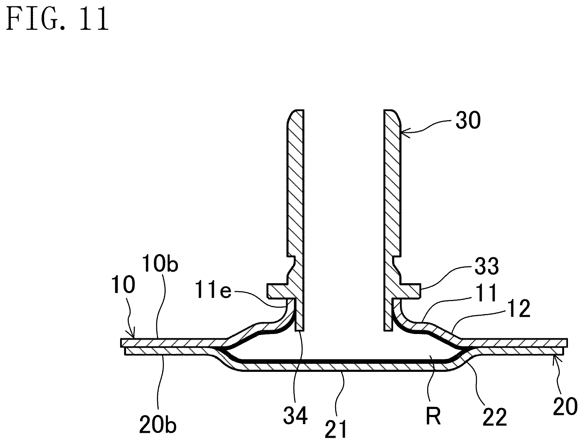

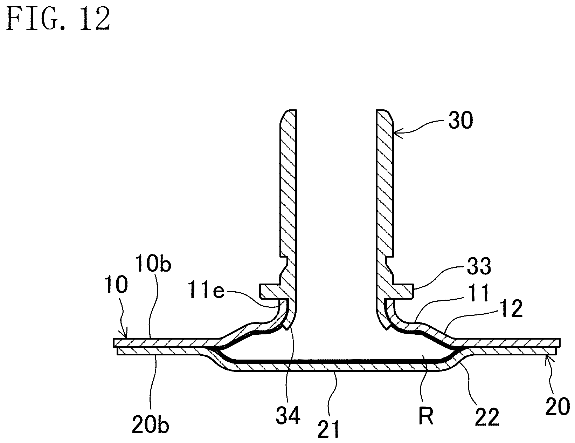

FIGS. 10 to 12 relate to a second embodiment of the present invention. In the second embodiment, a temporary fixing structure of an inlet-side pipe member 30 and an outlet-side pipe member 40 to an upper flow-path-forming plate 10 differs from that of the first embodiment. In the following description, the same parts as those in the first embodiment are denoted by the same reference numerals, and the description thereof will be omitted. Different parts will be described in detail.

The inlet-side pipe member 30 of the second embodiment has a flange portion 33 at a portion outside the flow path R. Further, an annular portion 11e formed by burring, which is an upwardly projected portion, is provided around the front through hole 11a in the front flat portion 11. The base end portion of the inlet-side pipe member 30 is inserted into the portion 11e formed by burring. With the inlet-side pipe member 30 inserted in the portion 11e formed by burring, the upper end portion of the portion 11e formed by burring is in contact with the lower surface of the flange portion 33, thereby achieving the positioning of the inlet-side pipe member 30.

Using a tool not shown, the diameter of the base end portion 34 of the inlet-side pipe member 30 is expanded from inside the pipe member 30, thereby making it possible to temporarily fix the inlet-side pipe member 30 to the upper flow-path-forming plate 10. The inlet-side pipe member 30 in this state is carried into a brazing furnace, so that a portion of the base end portion of the inlet-side pipe member 30 located inside the flow path R is brazed to the inner surface of the portion 11e formed by burring of the upper flow-path-forming plate 10. That is, in the second embodiment, the outer surface of the base end portion of the inlet-side pipe member 30 is the brazing portion. Thus, the second embodiment can also provide effects and advantages similar to those of the first embodiment, and the material cost can be reduced.

The above-described embodiments are merely examples in all respects and should not be construed in a limited manner. The scope of the invention is defined in the claims. For example, the first embodiment and the second embodiment can be applied to a single vehicle heat exchanger 1. The projection direction of the inlet-side pipe member 30 and the outlet-side pipe member 40 is not limited to the upward direction, and may be the downward direction. In this case, the vehicle heat exchanger 1 can be used in an upside-down orientation.

### INDUSTRIAL APPLICABILITY

As can be seen from the foregoing description, the vehicle heat exchanger according to the present invention can be used, for example, to adjust the temperature of a battery mounted on a vehicle.

### DESCRIPTION OF REFERENCE CHARACTERS

- 1: Vehicle Heat Exchanger
- 10: Upper Flow-Path-Forming Plate (First Flow-Path-Forming Plate)
- 11: Front Flat Portion
- 11a: Front Through Hole
- 11b: Swaging Portion
- 11c: Insertion Hole
- 20: Lower Flow-Path-Forming Plate (Second Flow-Path-Forming Plate)
- 30: Inlet-Side Pipe Portion
- 31: Brazing Portion
- 40: Outlet-Side Pipe Portion
- 200: Swaging Tool
- B: Battery
- R: Flow Path

## Claims

1. A vehicle heat exchanger (1) for a temperature adjustment of a battery (B) that supplies electric power to a traction motor mounted on a vehicle, wherein a first flow-path-forming plate (10) made of a metal and a second flow-path-forming plate (20) made of a metal are brazed to each other, the first flow-path-forming plate (10) being in contact with an outer surface of the battery (B), the second flow-path-forming plate (20) being arranged on an opposite side of the first flow-path-forming plate (10) to the battery (B), a flow path (R) that allows a liquid heat exchange medium to flow is provided between the first flow-path-forming plate (10) and the second flow-path-forming plate (20), **characterized in that** the first flow-path-forming plate (10) has a through hole (11a) for insertion of a base end portion of a pipe member (30) for supplying and discharging the heat exchange medium, and a brazing portion (31) is provided at a portion of the base end portion of the pipe member (30) located inside the flow path (R), the brazing portion (31) being brazed to an inner surface of the first flow-path-forming plate (10).

2. The vehicle heat exchanger (1) of claim 1, wherein the first flow-path-forming plate (10) has a flat portion (11) at a portion corresponding to the flow path (R), the through hole (11a) penetrates the flat portion (11), and the brazing portion (31) is brazed to an inner surface of the flat portion (11).

3. The vehicle heat exchanger (1) of claim 1, wherein the first flow-path-forming plate (10) is formed of a plate having a sacrificial layer (10c) only on a surface facing the second flow-path-forming plate (20).

4. The vehicle heat exchanger (1) of claim 1, wherein the second flow-path-forming plate (20) is formed of a plate having a sacrificial layer (20c) only on a surface facing the first flow-path-forming plate (10).

5. The vehicle heat exchanger (1) of claim 1, wherein the first flow-path-forming plate (10) is arranged so as to be in contact with a bottom surface of the battery (B), and has a long shape in a predetermined direction along the bottom surface, and the second flow-path-forming plate (20) is arranged under the first flow-path-forming plate (10), and extends in the predetermined direction.

6. The vehicle heat exchanger (1) of claim 5, wherein the pipe member includes a first pipe member (30) to supply the heat exchange medium to the flow path (R) and a second pipe member (40) to discharge the heat exchange medium from the flow path (R), the first pipe member (30) being provided on one side in a longitudinal direction of the first flow-path-forming plate (10), the second pipe member (40) being provided on the other side in the longitudinal direction of the first flow-path-forming plate (10), a first through hole (11a) for insertion of a base end portion of the first pipe member (30) is formed on the one side in the longitudinal direction of the first flow-path-forming plate (10), a second through hole (13a) for insertion of a base end portion of the second pipe member (40) is formed on the other side in the longitudinal direction of the first flow-path-forming plate (10), a first brazing portion (31) is provided at a portion of the base end portion of the first pipe member (30) located inside the flow path (R), the first brazing portion (31) being brazed to the inner surface of the first flow-path-forming plate (10), and a second brazing portion (31) is provided at a portion of the base end portion of the second pipe member (40) located inside the flow path (R), the second brazing portion (31) being brazed to the inner surface of the first flow-path-forming plate (10).

7. The vehicle heat exchanger (1) of claim 1, wherein the brazing portion (31) is formed of a projection projecting radially outward from an outer surface of the pipe member (30) and extending in a circumferential direction.

8. The vehicle heat exchanger (1) of claim 1, wherein the first flow-path-forming plate (10) has a temporary fixing portion (11b) to fix temporarily the pipe member (30) to the first flow-path-forming plate (10).

9. The vehicle heat exchanger (1) of claim 8, wherein the temporary fixing portion (11b) is formed of a swaging portion (11b) to be swaged and fixed to the pipe member (30).

10. The vehicle heat exchanger (1) of claim 9, wherein an insertion hole (11c) for insertion of a swaging tool (200) is formed in a portion of the first flow-path-forming plate (10) on an outside of the swaging portion (11b) in a radial direction of the through hole (11a).

11. The vehicle heat exchanger (1) of claim 10, wherein the brazing portion (31) is arranged so as to close the insertion hole (11c) from an inside of the flow path (R).

## Patentansprüche

1. Fahrzeugwärmetauscher (1) zur Temperaturregelung einer Batterie (B), die einen an einem Fahrzeug montierten Fahrmotor mit elektrischer Leistung versorgt, wobei eine erste strömungswegbildende Platte (10) aus einem Metall und eine zweite strömungswegbildende Platte (20) aus einem Metall miteinander verlötet sind, wobei die erste strömungswegbildende Platte (10) in Kontakt mit einer Außenfläche der Batterie (B) ist, wobei die zweite strömungswegbildende Platte (20) auf einer gegenüberliegenden Seite der ersten strömungswegbildenden Platte (10) zur Batterie (B) angeordnet ist, wobei ein Strömungsweg (R), der ein flüssiges Wärmeaustauschmedium fließen lässt, zwischen der ersten strömungswegbildenden Platte (10) und der zweiten strömungswegbildenden Platte (20) vorgesehen ist, **dadurch gekennzeichnet, dass** die erste strömungswegbildende Platte (10) ein Durchgangsloch (11a) zum Einführen eines Basisendabschnitts eines Rohrelements (30) zum Zuführen und Ablassen des Wärmeaustauschmediums aufweist und ein Lötabschnitt (31) an einem Abschnitt des Basisendabschnitts des Rohrelements (30), der sich innerhalb des Strömungswegs (R) befindet, vorgesehen ist, wobei der Lötabschnitt (31) mit einer Innenfläche der ersten strömungswegbildenden Platte (10) verlötet ist.

2. Fahrzeugwärmetauscher (1) nach Anspruch 1, wobei die erste strömungswegbildende Platte (10) an einem Abschnitt, der dem Strömungsweg (R) entspricht, einen flachen Abschnitt (11) aufweist, das Durchgangsloch (11a) den flachen Abschnitt (11) durchdringt und der Lötabschnitt (31) mit einer Innenfläche des flachen Abschnitts (11) verlötet ist.

3. Fahrzeugwärmetauscher (1) nach Anspruch 1, wobei die erste strömungswegbildende Platte (10) aus einer Platte ausgebildet ist, die eine Opferschicht (10c) nur auf einer der zweiten strömungswegbildenden Platte (20) zugewandten Oberfläche aufweist.

4. Fahrzeugwärmetauscher (1) nach Anspruch 1, wobei die zweite strömungswegbildende Platte (20) aus einer Platte ausgebildet ist, die eine Opferschicht (20c) nur auf einer der ersten strömungswegbildenden Platte (10) zugewandten Oberfläche aufweist.

5. Fahrzeugwärmetauscher (1) nach Anspruch 1, wobei die erste strömungswegbildende Platte (10) so angeordnet ist, dass sie in Kontakt mit einer Bodenfläche der Batterie (B) steht, und eine lange Form in einer vorbestimmten Richtung entlang der Bodenfläche aufweist, und die zweite strömungswegbildende Platte (20) unter der ersten strömungswegbildenden Platte (10) angeordnet ist und sich in der vorbestimmten Richtung erstreckt.

6. Fahrzeugwärmetauscher (1) nach Anspruch 5, wobei das Rohrelement ein erstes Rohrelement (30) zum Zuführen des Wärmeaustauschmediums zum Strömungsweg (R) und ein zweites Rohrelement (40) zum Ablassen des Wärmeaustauschmediums aus dem Strömungsweg (R) einschließt, wobei das erste Rohrelement (30) auf einer Seite in einer Längsrichtung der ersten strömungswegbildenden Platte (10) vorgesehen ist, wobei das zweite Rohrelement (40) auf der anderen Seite in der Längsrichtung der ersten strömungswegbildenden Platte (10) vorgesehen ist, ein erstes Durchgangsloch (11a) zum Einführen eines Basisendabschnitts des ersten Rohrelements (30) auf der einen Seite in der Längsrichtung der ersten strömungswegbildenden Platte (10) ausgebildet ist, ein zweites Durchgangsloch (13a) zum Einführen eines Basisendabschnitts des zweiten Rohrelements (40) auf der anderen Seite in der Längsrichtung der ersten strömungswegbildenden Platte (10) ausgebildet ist, ein erster Lötabschnitt (31) an einem Abschnitt des Basisendabschnitts des ersten Rohrelements (30), der sich innerhalb des Strömungswegs (R) befindet, vorgesehen ist, wobei der erste Lötabschnitt (31) mit der Innenfläche der ersten strömungswegbildenden Platte (10) verlötet ist und ein zweiter Lötabschnitt (31) an einem Abschnitt des Basisendabschnitts des zweiten Rohrelements (40), der sich innerhalb des Strömungswegs (R) befindet, vorgesehen ist, wobei der zweite Lötabschnitt (31) mit der Innenfläche der ersten strömungswegbildenden Platte (10) verlötet ist.

7. Fahrzeugwärmetauscher (1) nach Anspruch 1, wobei der Lötabschnitt (31) aus einem Vorsprung ausgebildet ist, der von einer Außenfläche des Rohrelements (30) radial nach außen vorsteht und sich in einer Umfangsrichtung erstreckt.

8. Fahrzeugwärmetauscher (1) nach Anspruch 1, wobei die erste strömungswegbildende Platte (10) einen vorübergehenden Befestigungsabschnitt (11b) aufweist, um das Rohrelement (30) vorübergehend an der ersten strömungswegbildenden Platte (10) zu befestigen.

9. Fahrzeugwärmetauscher (1) nach Anspruch 8, wobei der vorübergehende Befestigungsabschnitt (11b) aus einem Pressabschnitt (11b) ausgebildet ist, der auf das Rohrelement (30) angepresst und daran befestigt wird.

10. Fahrzeugwärmetauscher (1) nach Anspruch 9, wobei ein Einführloch (11c) zum Einführen eines Presswerkzeugs (200) in einem Abschnitt der ersten strömungswegbildenden Platte (10) an einer Außenseite des Pressabschnitts (11b) in einer radialen Richtung des Durchgangslochs (11a) ausgebildet ist.

11. Fahrzeugwärmetauscher (1) nach Anspruch 10, wobei der Lötabschnitt (31) so angeordnet ist, dass er das Einführloch (11c) von einer Innenseite des Strömungswegs (R) aus verschließt.

## Revendications

1. Échangeur de chaleur pour véhicule (1) destiné au réglage de la température d'une batterie (B) qui alimente en puissance électrique un moteur de traction monté sur un véhicule, dans lequel une première plaque formant un chemin d'écoulement (10) réalisée en métal et une seconde plaque formant un chemin d'écoulement (20) réalisée en métal sont brasées l'une à l'autre, la première plaque formant un chemin d'écoulement (10) étant en contact avec une surface externe de la batterie (B), la seconde plaque formant un chemin d'écoulement (20) étant agencée sur un côté opposé de la première plaque formant un chemin d'écoulement (10) par rapport à la batterie (B), un chemin d'écoulement (R) qui permet l'écoulement d'un milieu liquide d'échange de chaleur est prévu entre la première plaque formant un chemin d'écoulement (10) et la seconde plaque formant un chemin d'écoulement (20), **caractérisé en ce que** la première plaque formant un chemin d'écoulement (10) a un trou traversant (11a) pour l'insertion d'une partie d'extrémité de base d'un élément de tuyau (30) afin de fournir et d'évacuer le milieu d'échange de chaleur, et une partie de brasage (31) est prévue au niveau d'une partie de la partie d'extrémité de base de l'élément de tuyau (30) située à l'intérieur du chemin d'écoulement (R), la partie de brasage (31) étant brasée à une surface interne de la première plaque formant un chemin d'écoulement (10).

2. Échangeur de chaleur pour véhicule (1) selon la revendication 1, dans lequel la première plaque formant un chemin d'écoulement (10) a une partie plate (11) au niveau d'une partie correspondant au chemin d'écoulement (R), le trou traversant (11a) traverse la partie plate (11), et la partie de brasage (31) est brasée à une surface interne de la partie plate (11).

3. Échangeur de chaleur pour véhicule (1) selon la revendication 1, dans lequel la première plaque formant un chemin d'écoulement (10) est formée d'une plaque ayant une couche sacrificielle (10c) uniquement sur une surface faisant face à la seconde plaque formant un chemin d'écoulement (20).

4. Échangeur de chaleur pour véhicule (1) selon la revendication 1, dans lequel la seconde plaque formant un chemin d'écoulement (20) est formée d'une plaque ayant une couche sacrificielle (20c) uniquement sur une surface faisant face à la première plaque formant un chemin d'écoulement (10).

5. Échangeur de chaleur pour véhicule (1) selon la revendication 1, dans lequel la première plaque formant un chemin d'écoulement (10) est agencée de manière à être en contact avec une surface inférieure de la batterie (B), et présente une forme allongée dans une direction prédéterminée le long de la surface inférieure, et la seconde plaque formant un chemin d'écoulement (20) est agencée sous la première plaque formant un chemin d'écoulement (10), et s'étend dans la direction prédéterminée.

6. Échangeur de chaleur pour véhicule (1) selon la revendication 5, dans lequel l'élément de tuyau comprend un premier élément de tuyau (30) destiné à fournir le milieu d'échange de chaleur au chemin d'écoulement (R) et un second élément de tuyau (40) destiné à évacuer le milieu d'échange de chaleur du chemin d'écoulement (R), le premier élément de tuyau (30) étant prévu sur un premier côté dans une direction longitudinale de la première plaque formant un chemin d'écoulement (10), le second élément de tuyau (40) étant prévu sur l'autre côté dans la direction longitudinale de la première plaque formant un chemin d'écoulement (10), un premier trou traversant (11a) pour l'insertion d'une partie d'extrémité de base du premier élément de tuyau (30) est formé sur le premier côté dans la direction longitudinale de la première plaque formant un chemin d'écoulement (10), un second trou traversant (13a) pour l'insertion d'une partie d'extrémité de base du second élément de tuyau (40) est formé sur l'autre côté dans la direction longitudinale de la première plaque formant un chemin d'écoulement (10), une première partie de brasage (31) est prévue au niveau d'une partie de la partie d'extrémité de base du premier élément de tuyau (30) située à l'intérieur du chemin d'écoulement (R), la première partie de brasage (31) étant brasée à la surface interne de la première plaque formant un chemin d'écoulement (10), et une seconde partie de brasage (31) est prévue au niveau d'une partie de la partie d'extrémité de base du second élément de tuyau (40) située à l'intérieur du chemin d'écoulement (R), la seconde partie de brasage (31) étant brasée à la surface interne de la première plaque formant un chemin d'écoulement (10).

7. Échangeur de chaleur pour véhicule (1) selon la revendication 1, dans lequel la partie de brasage (31) est formée d'une projection faisant saillie radialement vers l'extérieur à partir d'une surface externe de l'élément de tuyau (30) et s'étendant dans une direction circonférentielle.

8. Échangeur de chaleur pour véhicule (1) selon la revendication 1, dans lequel la première plaque formant un chemin d'écoulement (10) a une partie de fixation temporaire (11b) pour fixer temporairement l'élément de tuyau (30) à la première plaque formant un chemin d'écoulement (10).

9. Échangeur de chaleur pour véhicule (1) selon la revendication 8, dans lequel la partie de fixation temporaire (11b) est formée d'une partie de sertissage (11b) devant être sertie et fixée à l'élément de tuyau.

10. Échangeur de chaleur pour véhicule (1) selon la revendication 9, dans lequel un trou d'insertion (11c) pour l'insertion d'un outil de sertissage (200) est formé dans une partie de la première plaque formant un chemin d'écoulement (10) à l'extérieur de la partie de sertissage (11b) dans une direction radiale du trou traversant (11a).

11. Échangeur de chaleur pour véhicule (1) selon la revendication 10, dans lequel la partie de brasage (31) est agencée de manière à fermer le trou d'insertion (11c) depuis l'intérieur du chemin d'écoulement (R).
